# EUROPÄISCHE PATENTSCHRIFT

(11) **EP 1 999 829 B1**
(45) Veröffentlichungstag und Bekanntmachung des Hinweises auf die Patenterteilung: **13.11.2013**
(21) Anmeldenummer: 07726928.0
(22) Anmeldetag: 15.03.2007
(51) Int. Cl.: H02B 1/32

(54) **SCHALTSCHRANKTRENNWAND**
SWITCHGEAR CABINET PARTITION
PAROI DE SÉPARATION D'UNE ARMOIRE DE DISTRIBUTION

(30) Priorität: 30.03.2006 DE 102006015316
(43) Veröffentlichungstag der Anmeldung: 10.12.2008
(73) Patentinhaber: Siemens Aktiengesellschaft, 80333 München (DE)
(72) Erfinder: GOHLICKE, Kay, 04157 Leipzig (DE)
(86) Internationale Anmeldenummer: PCT/EP2007/052438
(87) Internationale Veröffentlichungsnummer: WO 2007/113092

(56) Entgegenhaltungen:
- EP-A- 1 024 568
- EP-A- 1 202 415

## Beschreibung

Die Erfindung betrifft eine Schaltschranktrennwand zur Trennung von Funktionsräumen, die eine Mehrzahl miteinander fluchtender Trennelemente aufweist, die von einem Querverbinder derart zusammengehalten werden, dass sich eine Trennwand ergibt.

In Niederspannungsschaltanlagen bzw. in Niederspannungsschaltschränken müssen Funktionsräume räumlich voneinander getrennt werden. Diese Unterteilung eines Gesamtraums in mehrere einzelne Räume wird durch geeignete Trennelemente erreicht. Diese Trennelemente sind Wände oder werden aus einzelnen Segmenten zu einer Wand zusammengefügt. Als Materialien für die Trennelemente werden metallische und/oder nichtmetallische Werkstoffe verwendet. Durch die Trennelemente hindurch können elektrische Leiter geführt werden, wobei das Erfordernis besteht, dass eine ausreichende Isolationsstrecke zwischen dem Leiter und angrenzenden metallischen Teilen vorhanden ist. Aus Gründen des Arbeitsschutzes werden Öffnungen in Trennelementen, durch die elektrische Leiter hindurchgeführt werden, derart ausgeführt, dass ein Durchgreifen durch diese Öffnungen nicht möglich ist.

Eine Unterteilung eines Gesamtraumes ist insbesondere in Schaltanlagen erforderlich, die mit Sammelschienensystemen ausgerüstet sind. An die Einzelleiter mehrphasiger Sammelschienensysteme werden zur Stromversorgung von Geräten oder weiterer Verteilsysteme elektrische Leiter angeschlossen. Es ist erforderlich, dass die gesamte Fläche bzw. Länge der Sammelschiene zum Anschluss von Verbindungsleitern zur Verfügung steht, da es aufgrund der unterschiedlichen Gerätetypen bzw. Gerätegrößen in einer Schaltanlage zu einer erheblichen Konzentration von Anschlüssen auf einem bestimmten Abschnitt der Sammelschiene kommen kann.

Aus dem Dokument DE 93 06 505 U1 ist eine Schutzabdeckung für Stromschienenverteiler bekannt, die mit vorgestanzten Durchbrüchen versehen ist. Beim Erfordernis der Durchführung von Leitern durch diese als Trennwand funktionierende Schutzabdeckung ist es erforderlich, Teilflächen der Abdeckung aus der Gesamtfläche herauszubrechen. Diese herausbrechbaren Teilflächen sind an bestimmten Positionen in der Abdeckung angeordnet. Eine flexible Anpassung an unterschiedliche Gerätekonstellationen ist mit dieser Abdeckung daher nicht möglich. Das Dokument EP 1024568 offenbart auch ein Gerät gemäss dem Oberbegriff des Anspruches 1.

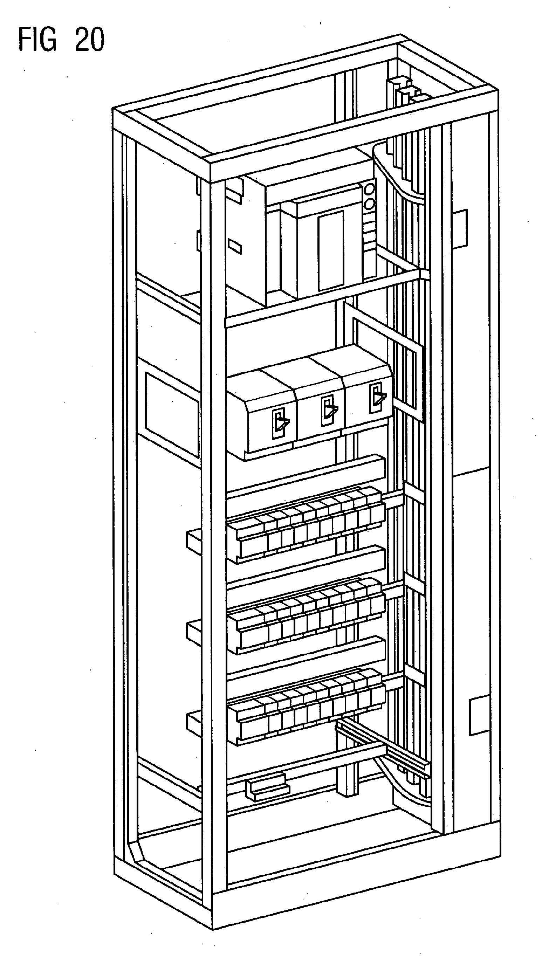

Den für die Erfindung nächstliegenden Stand der Technik bildet die in Figur 20 dargestellte Trennwand. Es sind einzelne länglich geformte Trennelemente gezeigt, die längs zu den Sammelschienenleitern verlaufen und fluchtend zur Anschlussfläche eines Sammelschienenleiters jeweils einen Abstand zum benachbarten Trennelement aufweisen.

Die Abstände bzw. Lücken zwischen den Trennelementen entsprechen der Anzahl der Sammelschienenleiter. Querverbinder verbinden die einzelnen Längselemente derart miteinander, dass eine Trennwand hergestellt wird. Die Querverbinder sind dabei klammerartig ausgeführt; bei Befestigung der Trennelemente mittels der Querverbinder ergeben sich damit nur definierte, durch die Spalte zwischen den Trennelementen gebildete Durchtrittsmöglichkeiten heraus. Die Trennelemente weisen alle eine feste unveränderliche Breite auf. Eine flexible Anpassung an ungleichmäßige Abstände zwischen Sammelschienenleitern bzw. an erhöhte Konzentrationen von Verbindungsleitern am Sammelschienensystem kann somit mit dieser Ausführungsform nicht erreicht werden.

Der Erfindung liegt damit die Aufgabe zugrunde, eine Trennwand für Schaltschränke oder Schaltanlagen zur Verfügung zu stellen, mit denen einfach, flexibel, sicher und kostengünstig eine Abtrennung von Funktionsräumen erreicht werden kann.

Die Aufgabe wird durch die im Anspruch 1 angegebenen erfinderischen Merkmale gelöst. Vorteilhafte Ausgestaltungen sind in den Unteransprüchen angegeben.

Es wird eine Schaltschranktrennwand zur Trennung von Funktionsräumen zur Verfügung gestellt, die eine Mehrzahl miteinander fluchtender und parallel zueinander beabstandet angeordneter Trennelemente aufweist, die in ihren Längserstreckungen von einer Wandkante zu einer gegenüberliegenden Wandkante verlaufen. Die Schaltschranktrennwand umfasst des Weiteren einen im Wesentlichen senkrecht zur Längserstreckung der Trennelemente verlaufenden, auf wenigstens einer Seite der Trennwand angeordneten Querverbinder, der die einzelnen Trennelemente mit definiertem Abstandsmaß zur Herstellung einer Wand zusammenhält. Dabei weist jedes Trennelement zumindest eine sich über seine gesamte Längserstreckung erstreckende Ausnehmung auf, und jeder Querverbinder weist in seiner Längsrichtung in Reihe angeordnete zapfenartige Vorsprünge auf, wobei die zapfenartigen Vorsprünge derart komplementär zu den Ausnehmungen der Trennelemente ausgestaltet sind, dass sie in diese rastend einsteckbar sind, so dass eine formschlüssige Verbindung zwischen den zapfenartigen Vorsprüngen und den Ausnehmungen entsteht und die Trennelemente über den Querverbinder miteinander verbunden sind.

Bei relativ dichter Anordnung von Sammelschienenleitern in Schaltschränken bzw. -anlagen ist es erforderlich, dass die Trennelemente im Wesentlichen eine Streifenform aufweisen, die es ermöglicht, eine Vielzahl von Abständen zwischen den Trennelementen zur Hindurchführung von Leitern durch die Trennwand zu den Sammelschienensystemen herzustellen. Die streifenförmigen Trennelemente sind dabei parallel zueinander angeordnet. Üblicherweise sind die in Schaltschränken bzw. -anlagen herzustellenden Trennwände entsprechend der Schaltschrankgeometrie rechteckig, das heißt, dass die Trennelemente parallel zu zwei sich gegenüberliegenden Wandkanten verlaufen und mit ihren schmalen Seiten die anderen beiden sich gegenüberliegenden Wandkanten der Trennwand bilden. Der Querverbinder arretiert und positioniert die einzelnen Trennelemente derart, dass diese zwischen sich jeweils einen Spalt zur Hindurchführung von Leitern freilassen. Alle Trennelemente weisen dabei dasselbe Profil auf, können aber in ihrer Breite unterschiedlich sein. Des Weiteren sind in jedem Trennelement längliche Ausnehmungen, die zwischen Vorsprüngen gebildet werden, die senkrecht zur Trennwandfläche angeordnet sind. Diese Vorsprünge und damit auch die Ausnehmungen verlaufen in Längsrichtung der Trennelemente über deren gesamte Länge. Zur Verbindung der Trennelemente mittels des Querverbinders rasten dessen zapfenartige Vorsprünge in den Ausnehmungen der Trennelemente ein. Zur Herstellung der Trennwand aus einzelnen Trennelementen können sich ein oder mehrere Querverbinder über die gesamte Breite einer Trennwand senkrecht zur Längserstreckungsrichtung der Trennelemente erstrecken. Um eine größere Verwindungssteife der Trennwand zu erreichen, werden vorzugsweise mehrere parallel zueinander angeordnete Querverbinder auf den Trennelementen befestigt.

Die Abstände zwischen den Trennelementen ergeben somit Durchtrittsöffnungen zur Verbindung des Sammelschienensystems mit Geräten oder weiteren Verteilsystemen über Schienen oder Kabel nahezu auf der gesamten Höhe bzw. Länge der Trennwand. Durch die flexible Breitengestaltung eines Trennelementes sowie durch die flexiblen Aufnahmemöglichkeiten durch die Einrastung der zapfenartigen Vorsprünge des Querverbinders in die Ausnehmungen der Trennelemente können die Abstände bzw. Durchlassöffnungen zwischen den Trennelementen an unterschiedliche Leiterabstände eines Sammelschienensystems angepasst werden. Das heißt, durch die Veränderung der Breite der Trennelemente und Flexibilität der Aufnahmemöglichkeiten des Querverbinders in den Ausnehmungen der Trennelemente ist eine Fertigung einer Trennwand für unterschiedliche Sammelschienensystem mit variabler Leiteranzahl und variablen Leiterabständen flexibel möglich.

Die Trennelemente sind vorzugsweise dünnwandige Kunststoffstrangprofile. Dadurch sind sie in einfacher Weise auch mit Handwerkzeugen bearbeitbar und können in ihrer Breite unmittelbar an Abstände der Sammelschienenleiter angepasst werden. Durch die Tiefe der die Ausnehmungen in den Trennelementen bildenden Vorsprünge kann Einfluss auf das Flächenträgheitsmoment des Trennelementes genommen werden. Das heißt, dass bei Ausbildung tieferer, die Ausnehmungen bildender Vorsprünge die Biegefestigkeit des Trennelements um eine Achse, die senkrecht zur Längserstreckung des Trennelementes verläuft, verbessert werden kann.

In vorteilhafter Weise kann vorgesehen sein, dass der Abstand zwischen den zur Trennwand angeordneten Trennelementen nicht größer als 12 mm ist. Das bedeutet, dass bei Einrastung eines Querverbinders in zwei Trennelementen und Freilassung eines zapfenartigen Vorsprungs im Querverbinder zwischen den Trennelementen die Trennelemente einen Abstand aufweisen, der nicht größer als 12 mm ist. Dieses Abstandsmaß dient der Absicherung des unbeabsichtigten oder unbefugten Eingriffs einer oder mehrerer Finger durch die Trennwand.

Es kann des Weiteren vorgesehen sein, dass an den Flanken der zapfenartigen Vorsprünge der Querverbinder Nasen angeordnet sind, die im eingesteckten Zustand in Kerben greifen, die in den Innenflanken der Ausnehmungen in den Trennelementen angeordnet sind. Insbesondere diese Ausbildung der zapfenartigen Vorsprünge des Querverbinders und der Ausnehmungen in den Trennelementen ermöglicht die formschlüssige Verbindung zwischen Trennelement und Querverbinder. Durch die flexiblen Materialeigenschaften des Querverbinders sowie der Trennelemente ist ein Hineinschieben und Herausziehen der zapfenartigen Vorsprünge aus den Ausnehmungen der Trennelemente bei entsprechender Kraftanwendung möglich.

In einer bevorzugten Ausführungsform sind in parallel zur Gesamtfläche der Trennwand sich erstreckenden Flächen der Trennelemente Sollbruchstellen ausgebildet. Diese Sollbruchstellen sind z.B. Kerben im Trennelementprofil, die sich entsprechend der Längsausdehnung der Trennelemente über deren gesamte Länge erstrecken. Diese spezielle Ausführungsform der Trennelemente ist insbesondere dann vorteilhaft, wenn die Trennelemente aus einer Gesamtplatte eines Kunststoffstrangprofils gefertigt sind, denn durch die Anordnung dieser Sollbruchstellen ist es möglich, unterschiedlich breite Trennelementstreifen aus diesem als Platte hergestellten Kunststoffträger herauszubrechen. Des Weiteren können bestehende Trennelemente in Trennwänden in einfacher Weise in schmalere Segmente unterteilt werden.

Zur Herstellung einer Trennwand aus einzelnen Trennelementen kann sich zumindest ein Querverbinder senkrecht zur Längserstreckungsrichtung der Trennelemente über die gesamte Breite der Trennwand erstrecken. Die zapfenförmigen Vorsprünge des Querverbinders rasten somit in Ausnehmungen eines jeden Trennelementes. Zur Herstellung einer biege- bzw. verwindungssteifen Trennwand ist allerdings vorzusehen, dass eine Mehrzahl von Querverbindern die einzelnen Trennwände miteinander verbindet.

Es kann des Weiteren vorgesehen sein, dass die Ausnehmung im Trennelement durch den Zwischenraum zwischen jeweils zwei von einer Grundfläche des Trennelements senkrecht abstehenden, parallel zueinander angeordneten und sich über die gesamte Längsausdehnung des Trennelements erstreckenden Vorsprüngen gebildet wird, so dass sich bei Anordnung einer Mehrzahl von Ausnehmungen in einem Trennelement ein kammartiges Profil des Trennelementes ergibt. Vorzugsweise weisen die nebeneinander angeordneten Ausnehmungen aller Trennelemente einer Trennwand die gleiche Breite und Tiefe auf.

Es kann somit auch auf einer Seite der Trennwand eine Mehrzahl von Querverbindern auf den Trennelementen angeordnet sein, wobei die Länge eines jeden Querverbinders kürzer als die Trennwandbreite ist und die Gesamt-Länge aller Querverbinder zusammen länger als die Trennwandbreite ist. Das bedeutet, dass nicht jeder Querverbinder mit jedem Trennelement in Kontakt ist. Es versteht sich, dass in diesem Falle die Querverbinder in Profillängsrichtung gesehen teilweise überlappend angeordnet sein müssen. Das bedeutet, dass zumindest in einer Ausnehmung eines Trennelementes mehrere zapfenförmige Vorsprünge einzelner Querverbinder höhenmäßig versetzt in Trennelementen eingerastet sind.

Trotz der Nichtkontaktierung jedes Querverbinders mit jedem Trennelement kann durch den Einsatz einer Mehrzahl von Querverbindern eine relativ stabile Trennwand hergestellt werden.

Durch die überlappenden und nicht über die gesamte Breite der Trennwand angeordneten Querverbinder ist es möglich, an Stellen, an denen an den Sammelschienenleitern extrem viele Anschlüsse vorgesehen sind, besonders viel Freiraum zur Durchführung von Leitern durch die Trennwand zur Verfügung zu stellen. Zu diesem Zweck werden einzelne kürzere Querverbinder in ihrer Anordnungshöhe derart verschoben, dass an den Stellen der Anbringung von Leitern an den Sammelschienensystemen mehr Raum für Durchlassöffnungen für elektrische Leiter besteht.

In einer alternativen Ausgestaltung kann vorgesehen sein, dass die Ausnehmung im Trennelement durch den Zwischenraum zwischen jeweils zwei zueinander parallel angeordneten und senkrecht zur Gesamt-Trennwandfläche stehenden und über die gesamte Längsausdehnung des Trennelements erstreckenden Vorsprünge gebildet wird, wobei diese Vorsprünge bei Anordnung einer Mehrzahl von Ausnehmungen in einem Trennelement derart miteinander verbunden sind, dass sie eine rechtwinklig gestaltete Mäanderform ergeben.

Eine günstige Ausgestaltung des mäanderförmigen Profils ist eine Aneinanderreihung von abwechselnd in entgegengesetzte Richtungen ausgerichtete winklige U-Profile.

Vorzugsweise weisen die durch die Mäanderform auf beiden Seiten des Trennelements gebildeten Ausnehmungen gleiche Breiten und Tiefen auf.

Im Gegensatz zu der oben erwähnten Ausgestaltung der Trennelemente in Kammprofilform ist es bei der Ausgestaltung der Trennelemente in Mäanderform möglich, auf beiden Seiten der Trennelemente bzw. der Trennwand Querverbinder anzuordnen, die in die jeweiligen u-förmigen Teilsegmente des mäanderförmigen Profils eines Trennelementes einrasten können. Es kann auch in dieser Ausgestaltung vorgesehen sein, dass eine Mehrzahl von Querverbindern auf beiden Seiten der Trennwand angeordnet ist, wobei die Länge eines jeden Querverbinders kürzer als die Trennwandbreite ist und die Gesamt-Länge aller Querverbinder zusammen länger als die Trennwandbreite ist. Das heißt, dass nicht jeder Querverbinder mit jedem der Trennelemente in Kontakt ist, da er sich nicht über die gesamte Breite der Trennwand erstreckt. Wie schon oben in Bezug auf die Ausführungsform mit Kammprofil beschrieben, ist es auch hier möglich, dass einzelne kürzere Querverbinder die Trennelemente miteinander verbinden. Dafür ist vorgesehen, dass in jedem nicht am Rand der Trennwand angeordneten Trennelement mindestens ein zapfenförmiger Vorsprung von mindestens zwei unterschiedlichen Querverbindern eingerastet sind. Durch das mäanderförmige Profil des Trennelementes ist es möglich, den Querverbinder auf der Vorder- oder auf der Rückseite des Trennelementes in dieses einzurasten.

In einer bevorzugten Ausführungsform ist der Querverbinder als Winkelprofil ausgebildet, an dessen einer Winkelflanke die zapfenartigen Vorsprünge in Reihe angeordnet sind und an der an seinen Enden Stirnflächen mit Öffnungen zur Aufnahme von Befestigungsmitteln aufweist. Der Einsatz dieses in seiner Länge begrenzten Querverbinders ist insbesondere dann vorgesehen, wenn der Querverbinder sich über die gesamte Breite der Trennwand erstreckt und damit in Kontakt mit allen Trennelementen ist. Durch die Öffnungen in den Stirnflächen des Winkelprofils lassen sich Befestigungsmittel hindurchführen, die am Rahmen oder am Gestell des Schaltschrankes bzw. der Schaltanlage befestigt werden können. Ebenfalls kann vorgesehen sein, dass der Querverbinder in einer glatt ausgestalteten Winkelflanke Befestigungslöcher aufweist. Diese Befestigungslöcher sind ebenfalls dafür vorgesehen, den Querverbinder am Gehäuse des Schaltschrankes bzw. der Schaltanlage zu befestigen.

Durch die Ausgestaltung in Winkelform ergibt sich eine relativ hohe Verwindungs- und Biegesteifigkeit des Querverbinders.

Des Weiteren kann vorgesehen sein, dass der Querverbinder ein mäanderförmiges Profil aufweist, welches komplementär zu einem mäanderförmigen Profil der Trennelemente ausgestaltet ist. Das heißt, dass die zapfenförmigen Vorsprünge des Querverbinders durch die eckige Gestaltung von einzelnen Segmenten einer mäanderförmigen Struktur des Querverbinders gebildet werden. Bei entsprechender Dimensionierung des mäanderförmigen Profils der Trennelemente und der mäanderförmigen Struktur auf dem Querverbinder ist es möglich, erfindungsgemäß beide mäanderförmigen Strukturen ineinander zu schieben, so dass sie formschlüssig miteinander verbunden sind. Es kann dabei vorgesehen werden, dass das mäanderförmige Profil des Querverbinders das gleiche wie das mäanderförmige Profil der mit dem Querverbinder zu befestigenden Trennelemente ist. Diese Ausgestaltung hat insbesondere den Vorteil, dass die Herstellung der zapfenförmigen Vorsprünge des Querverbinders dadurch erleichtert wird, dass aus einem zur Herstellung der Trennelemente dienenden Kunststoffstrangprofil ein Streifen herausgeschnitten wird, der sich senkrecht zur Längserstreckung des Profils in den Trennelementen bzw. im Kunststoffstrangprofil erstreckt. Dieser Streifen kann als Querverbinder eingesetzt werden.

In einer alternativen Ausgestaltung kann der Querverbinder aus einem Winkelprofil bestehen, an dem auf einem Winkelschenkel Segmente mit einer Reihe von zapfenartigen Vorsprüngen mittels Einrasteinrichtungen angeordnet sind. Mit dieser Ausgestaltung ist es möglich, einzelne, relativ kurze Segmente, die die zapfenartigen Vorsprünge aufweisen, in flexibler Art und Weise auf dem Winkel zu verteilen. Die Verteilung der Segmente in Längsrichtung des Winkelprofils erfolgt dabei vorteilhafterweise entsprechend der Anordnung der Sammelschienen, das heißt, dass an den Stellen der Sammelschienen gegenüberliegend Segmente mit zapfenförmigen Vorsprüngen angeordnet werden.

Nachfolgend wird die Erfindung anhand der beiliegenden Zeichnungen beschrieben. Es zeigen:
- Figur 1: eine Trennwand in Schnittansicht;
- Figur 2: ein Trennelement mit mäanderförmigem Profil;
- Figur 3: ein Trennelement mit kammförmigem Profil;
- Figur 4: ein Trennelement mit doppeltem Kammprofil;
- Figur 5: einen Querverbinder;
- Figur 6: ein Kunststoffstrangprofil in mehreren Breiten;
- Figur 7: eine Trennwand in der Ansicht von vorn;
- Figur 8: eine Trennwand in der Ansicht von hinten;
- Figur 9: eine Trennwand mit daran befestigtem winkelförmigen Querverbinder;
- Figur 10: einen winkelförmigen Querverbinder;
- Figur 11: ein Segment eines Querverbinders;
- Figur 12: einen winkelförmigen Querverbinder mit Segmenten;
- Figur 13: eine mäanderförmige Trennwand und ein Querverbindersegment;
- Figur 14: eine mäanderförmige Trennwand und ein Querverbindersegment in eingerastetem Zustand;
- Figur 15: ein mäanderförmiges Segment eines Querverbinders;
- Figur 16: einen u-förmigen Querverbinder;
- Figur 17: einen u-förmiger Querverbinder mit eingeschobenen Segmenten;
- Figur 18: einen Querverbinder mit eingeschobenen Segmenten und darauf befestigten Trennelementen;
- Figur 19: eine Trennwand mit kürzeren, überlappenden Querverbindern und
- Figur 20: eine Schaltanlage gemäß Stand der Technik

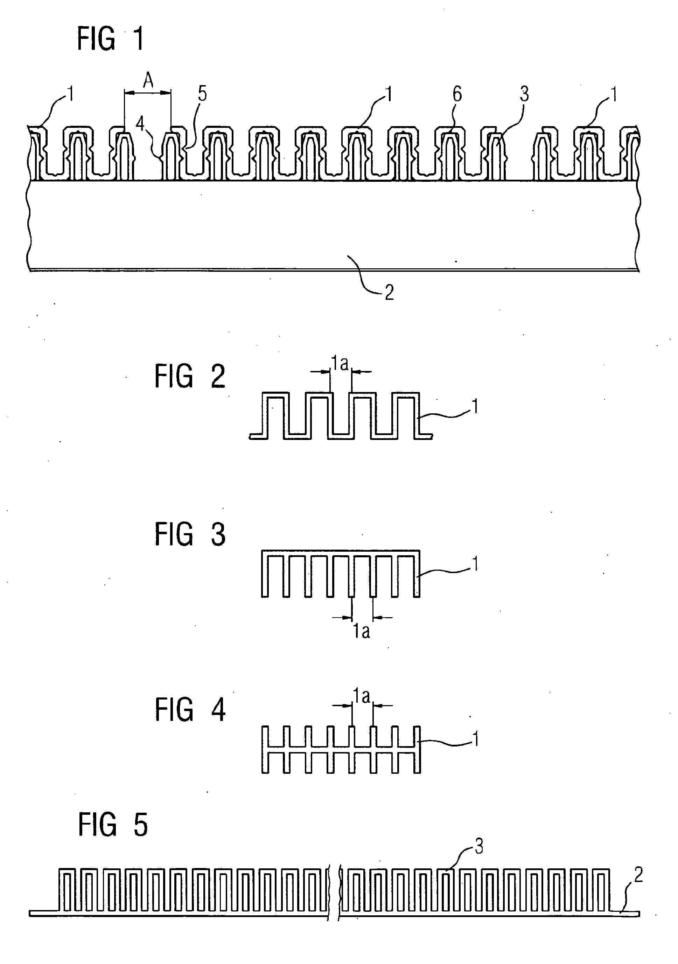

In Figur 1 ist ein Querverbinder 2 dargestellt, auf dessen zapfenartige Vorsprünge 3 mehrere in Schnittansicht dargestellte Trennelemente 1 aufgesteckt sind. Die Nasen 4 an den Flanken der zapfenartigen Vorsprünge 3 greifen im eingerasteten Zustand in Kerben 5 an den Innenseiten der Ausnehmungen (1a) des Trennelementes 1 ein. Die einzelnen Trennelemente 1 sind dabei derart auf den Querverbinder aufgesetzt, dass zwischen ihnen ein Abstand A besteht. Dieser Abstand A kann in Abhängigkeit der Abstände (Rasterung) der zapfenartigen Vorsprünge 3 zueinander sowie der Abstände (Rasterung) der Ausnehmungen (1a) des Trennelementes 1 zueinander frei gestaltet werden. Um eine Fingersicherung zu erreichen, sollte dieser Abstand A nicht größer als 12 mm sein. Es ist ersichtlich, dass die Längskanten der Trennelemente an den Sollbruchstellen 6 ausgebildet sind. Durch die Wandstärkenverringerung des Trennelementes an der Stelle der Sollbruchstelle 6 ist es in einfacher Weise möglich, bestehende Trennelemente an diesen Sollbruchstellen 6 in Längsrichtung zu zerteilen oder auch Kunststoffstrangprofile, aus denen die Trennelemente 1 hergestellt werden, an diesen Sollbruchstellen 6 in einzelne Trennelemente 1 zu zerteilen.

In Figur 2 ist ein Trennelement 1 mit einem mäanderförmigen Profil dargestellt. Dieses mäanderförmige Profil ist vorzugsweise ausschließlich rechteckig gestaltet, das heißt, das sämtliche einzelne Flächen des Trennelementes zu ihren jeweiligen benachbarten Flächen im rechten Winkel verlaufen.

Eine alternative Ausgestaltung des Trennelementes 1 ist in Figur 3 dargestellt. Das Trennelement 1 weist in dieser Ausführungsform ein kammartiges Profil auf. In diesem Falle hat das Trennelement 1 eine Rückwand, von der senkrecht Materialvorsprünge abstehen. In einer modifizierten Ausführungsform kann, wie in Figur 4 dargestellt, diese kammartige Struktur auf beiden Seiten der durchgehenden Rückwand des Trennelementes 1 vorgesehen sein.

In Figur 5 ist ein Querverbinder 2 mit einer Vielzahl von darauf angeordneten zapfenartigen Vorsprüngen 3 dargestellt. Es ist aus den Figuren 2 bis 5 ersichtlich, dass die zapfenartigen Vorsprünge 3 der Querverbinder 2 in die Lücken bzw. Ausnehmungen (1a) der Trennelemente 1, wie in Figur 1 dargestellt, eingeschoben werden können.

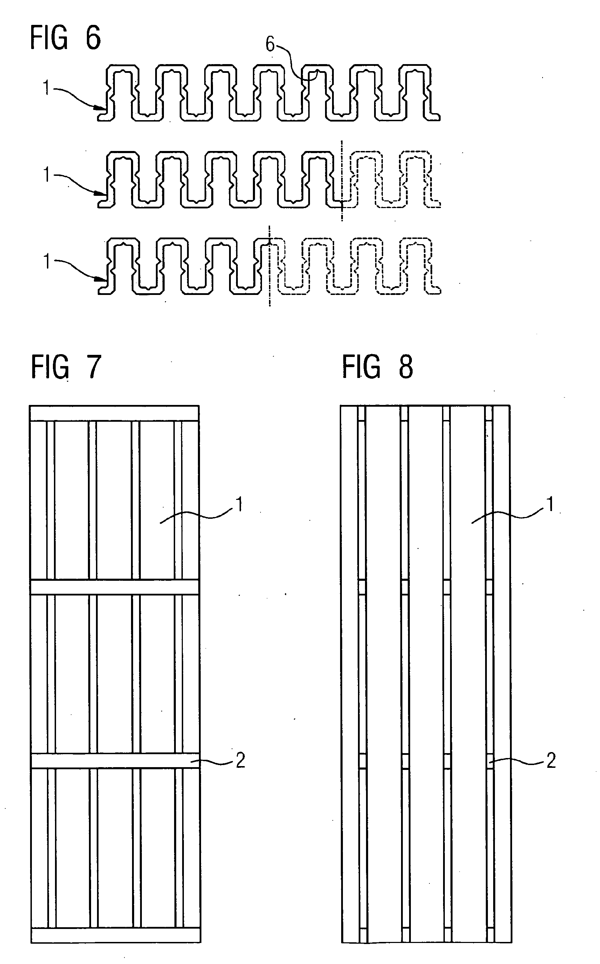

In Figur 6 ist dargestellt, wie aus einem breiten Kunststoffstrangprofil in einfacher Weise Trennelemente durch Abbrechen von Streifen bestimmter Breite an den Sollbruchstellen 6 hergestellt werden können.

In den Figuren 7 und 8 ist eine fertige Trennwand, bestehend aus einzelnen Trennelementen 1 und die sie verbindenden Querverbindern 2 in der Ansicht von vorn bzw. in der Ansicht von hinten dargestellt. Es ist dabei ersichtlich, dass zwischen den einzelnen Trennelementen 1 Spalte bzw. Durchlassöffnungen bestehen, die der Hindurchführung von elektrischen Leitern zu Sammelschienensystemen dienen.

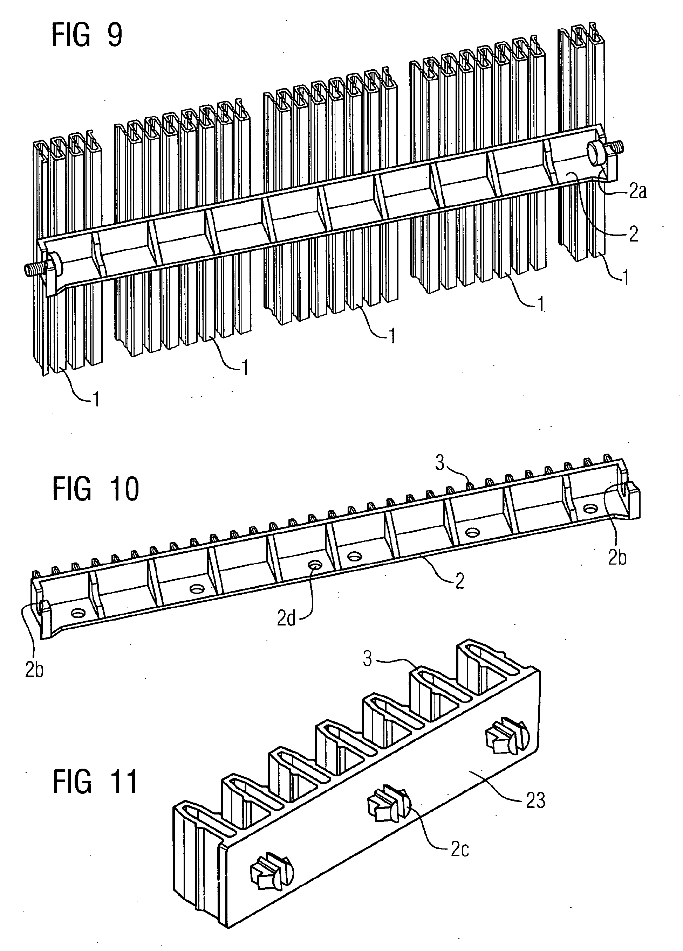

In Figur 9 ist eine Trennwand angedeutet, die aus einzelnen Trennelementen 1 besteht, die mittels eines winkelförmig ausgestalteten Querverbinders 2 miteinander befestigt sind. An den jeweiligen Enden des Querverbinders 2 befinden sich Stirnflächen 2a, die mit Durchlassöffnungen versehen sind. Wie in Figur 9 dargestellt, können durch diese Durchlassöffnungen Befestigungselemente hindurchgeführt werden zur Befestigung des Querverbinders an einem Rahmen oder einem Gestell einer Schaltanlage bzw. eines Schaltschrankes. Mit der Befestigung des Querverbinders 2 wird somit die gesamte aus einzelnen Trennelementen 1 bestehende Trennwand in der Schaltanlage bzw. dem Schaltschrank positioniert und fixiert.

In Figur 10 ist ein winkelförmiger Querverbinder 2 dargestellt, an dessen Stirnseiten 2a die Öffnungen 2b ersichtlich sind. Des Weiteren sind die zapfenartigen Vorsprünge 3 dargestellt, die in Reihe auf einer Winkelflanke des winkelförmigen Querverbinders 2 angeordnet sind. In dieser Ausführungsform sind die zapfenartigen Vorsprünge 3 einteilig mit dem Querverbinder 2 verbunden.

Zur Befestigung des winkelförmigen Querverbinders am Gestell des Schaltschrankes oder der Schaltanlage sind in der glatten Winkelflanke Bohrungen 2d vorgesehen, die der Aufnahme von Befestigungsmitteln, z.B. Schrauben, dienen.

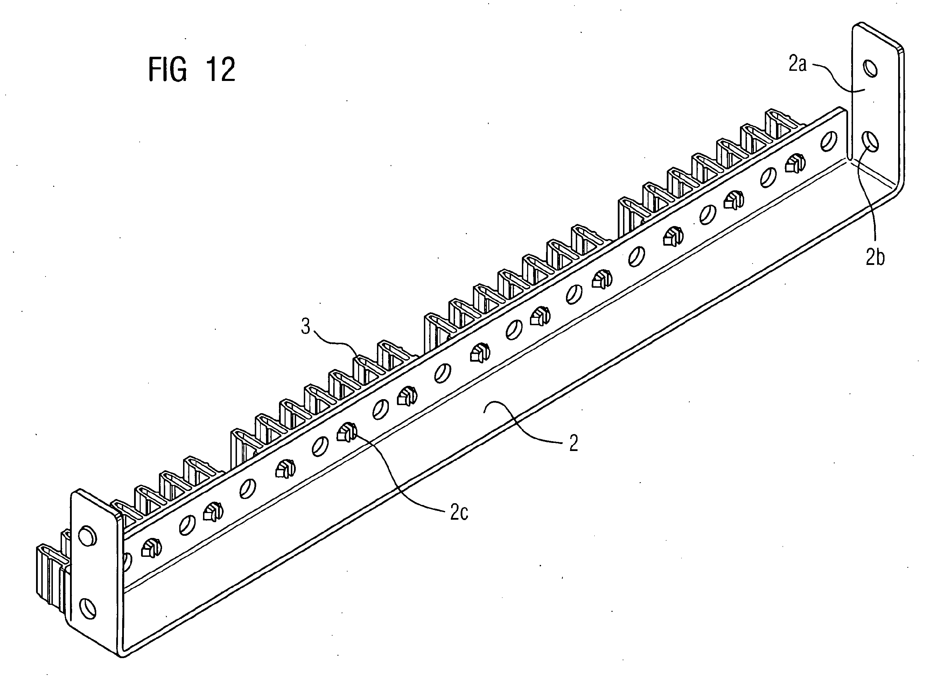

In einer alternativen Ausführungsform kann allerdings auch vorgesehen sein, dass auf dem winkligen Querverbinder 2 einzelne, wie in Figur 11 dargestellte Segmente 23, die eine Mehrzahl von zapfenartigen Vorsprüngen 3 aufweisen, angebracht sind. Diese Segmente 23 weisen Einrasteinrichtungen 2c auf. Wie in Figur 12 dargestellt, können diese Segmente 23 der Querverbinder 2 mittels ihrer Einrasteinrichtungen 2c in Öffnungen eingerastet werden, die an einer Winkelflanke des winkligen Querverbinders 2 ausgebildet sind. Es lässt sich somit auch ein unregelmäßiges Muster von zapfenartigen Vorsprüngen 3 auf dem Querverbinder 2 erzeugen.

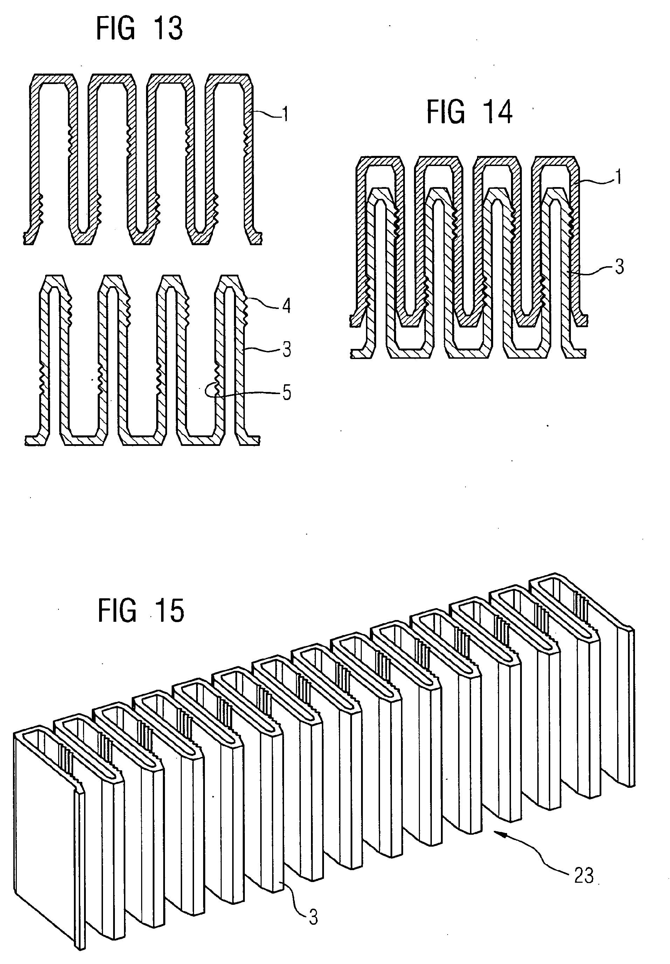

Figuren 13 und 14 beschreiben einen Sonderfall der Ausgestaltung der Trennelemente und des Querverbinders dahingehend, dass das Trennelement 1 sowie auch der Querverbinder 2 dasselbe mäanderförmige Profil aufweisen. An beiden Bauelementen sind dabei Nasen 4 sowie auch Kerben 5 vorgesehen, die ineinander einrasten können, wie in Figur 14 dargestellt. Diese Ausgestaltung ist insbesondere im Hinblick auf niedrige Herstellungskosten sinnvoll, da der Querverbinder 2 aus demselben Kunststoffstrangprofil herausgeschnitten werden kann, aus dem auch die einzelnen Trennelemente gefertigt werden. Dieser Streifen des mäanderförmigen Profils des Querverbinders 2 kann dabei zur Stabilitätserhöhung auf einen Träger angeordnet sein.

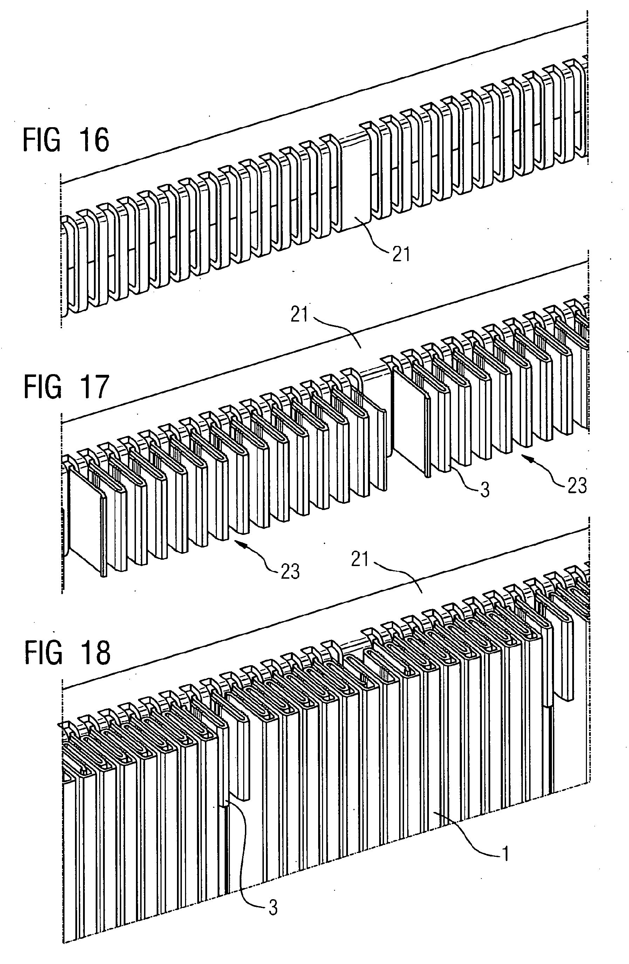

In Figur 15 ist ein solcher aus demselben Material wie die Trennelemente hergestellter Querverbinder 2 mit seinen zapfenartigen Vorsprüngen 3 dargestellt. In vorteilhafter Weise kann dieser spezielle Querverbinder 2 mit einem als geschlitztes U-Profil 21 ausgeführten Querverbinderträger zusammen wirken. Dazu wird, wie in Figur 17 dargestellt, der Querverbinder 2 mit seinen zapfenförmigen Vorsprüngen 3 durch die Schlitze des U-Profils 21 hindurchgesteckt. In dieser Ausführungsform bedarf es keiner weiteren Befestigung der zapfenartigen Vorsprünge in dem U-Profil 21. Zur Arretierung bzw. exakten Positionierung können allerdings auch Befestigungselemente zwischen Querverbinder 2 und U-Profil 21 vorgesehen sein.

In Figur 18 ist ein geschlitztes U-Profil 21 mit darin eingeschobenen Querverbindersegmenten 2 dargestellt. Auf die zapfenartigen Vorsprünge des Querverbinders 2 sind jeweils einzelne Trennelemente 1 aufgeschoben, so dass sie insgesamt eine Trennwand bilden.

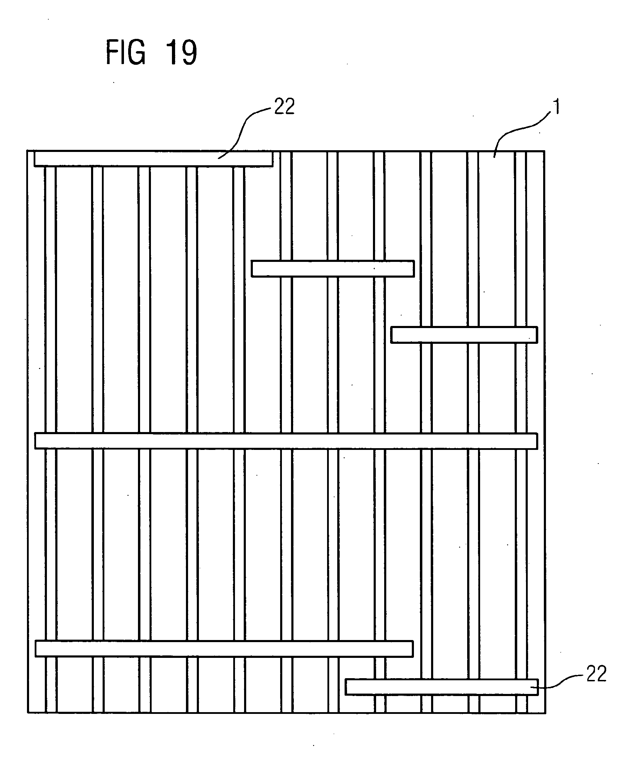

In Figur 19 ist eine Trennwand dargestellt, bei der einige kürzere Querverbinder 22 nicht über die gesamte Breite der Trennwand verlaufen. Es ist ersichtlich, dass sich die Enden dieser kürzeren Querverbinder 22 im Bereich der inneren Trennelemente 1 in Längsrichtung der Trennelemente 1 betrachtet mit benachbarten kürzeren Querverbindern überlappen. Das heißt, dass bei Befestigung eines Endes eines kürzeren Querverbinders 22 auf einem Trennelement, welches sich nicht am Rand der Trennwand befindet, auf diesem Trennelement auch wenigstens das Ende eines weiteren kürzeren Querträgers 22 befestigt ist. Es lässt sich durch diese Gestaltung der Trennwand eine noch flexiblere Anpassung an hohe Konzentrationen von Leitungsdurchführungen an bestimmten Positionen erreichen.

## Patentansprüche

1. Schaltschranktrennwand zur Trennung von Funktionsräumen, mit einer Mehrzahl miteinander fluchtender und parallel zueinander beabstandet angeordneter Trennelemente, die in ihren Längserstreckungen von einer Wandkante zu einer gegenüberliegenden Wandkante verlaufen, und mindestens einem im Wesentlichen senkrecht zur Längserstreckung der Trennelemente verlaufenden auf einer Seite der Trennwand angeordneten Querverbinder, der die einzelnen Trennelemente mit definiertem Abstandsmaß zur Herstellung einer Wand zusammenhält,
**dadurch gekennzeichnet, dass**
jedes Trennelement (1) zumindest eine sich über seine gesamte Längserstreckung erstreckende Ausnehmung (1a) aufweist, und jeder Querverbinder (2) in seiner Längsrichtung in Reihe angeordnete zapfenartige Vorsprünge (3) aufweist, wobei die zapfenartigen Vorsprünge (3) derart komplementär zu den Ausnehmungen (1a) der Trennelemente (1) ausgestaltet sind,
dass sie in diese rastend einsteckbar sind, so dass eine formschlüssige Verbindung zwischen den zapfenartigen Vorsprüngen (3) und den Ausnehmungen (1a) entsteht und die Trennelemente (1) über den Querverbinder (2) miteinander verbunden sind.

2. Schaltschranktrennwand nach Anspruch 1,
**dadurch gekennzeichnet, dass**
der Abstand zwischen den Trennelementen (1) nicht größer als 12 mm ist.

3. Schaltschranktrennwand nach einem der vorhergehenden Ansprüche,
**dadurch gekennzeichnet, dass**
an den Flanken der zapfenartigen Vorsprünge (3) der Querverbinder (2) Nasen (4) angeordnet sind, die im eingesteckten Zustand in Kerben (5) greifen, die in den Innenflanken der Ausnehmungen (1a) angeordnet sind.

4. Schaltschranktrennwand nach einem der vorhergehenden Ansprüche,
**dadurch gekennzeichnet, dass**
in den sich parallel zur Gesamtwandfläche erstreckenden Flächen der Trennelemente (1) Sollbruchstellen (6) ausgebildet sind.

5. Schaltschranktrennwand nach einem der vorhergehenden Ansprüche,
**dadurch gekennzeichnet, dass**
die Trennelemente (1) Kunststoffstrangprofile sind.

6. Schaltschranktrennwand nach einem der vorhergehenden Ansprüche,
**dadurch gekennzeichnet, dass**
sich mindestens ein Querverbinder (2) senkrecht zur Längserstreckung der Trennelemente (1) über die gesamte Breite der Trennwand erstreckt.

7. Schaltschranktrennwand nach einem der vorhergehenden Ansprüche,
**dadurch gekennzeichnet, dass**
die Ausnehmung (1a) im Trennelement (1) durch den Zwischenraum zwischen jeweils zwei von einer Grundfläche des Trennelements (1) senkrecht abstehenden, parallel zueinander angeordneten und sich über die gesamte Längsausdehnung des Trennelements (1) erstreckenden Vorsprüngen gebildet wird, so dass sich bei Anordnung einer Mehrzahl von Ausnehmungen (1a) in einem Trennelement (1) ein kammartiges Profil des Trennelements (1) ergibt.

8. Schaltschranktrennwand nach Anspruch 7,
**dadurch gekennzeichnet, dass**
die nebeneinander angeordneten Ausnehmungen (1a) aller Trennelemente (1) die gleiche Breite und Tiefe aufweisen.

9. Schaltschranktrennwand nach einem der Ansprüche 7 bis 8,
**dadurch gekennzeichnet, dass**
eine Mehrzahl von Querverbindern (2) auf einer Seite der Trennwand angeordnet ist, wobei die Länge eines jeden Querverbinders (2) kürzer als die Trennwandbreite ist und die Gesamt-Länge aller Querverbinder (2) zusammen länger als die Trennwandbreite ist.

10. Schaltschranktrennwand nach einem der Ansprüche 1 bis 6,
**dadurch gekennzeichnet, dass**
die Ausnehmung (1a) im Trennelement (1) durch den Zwischenraum zwischen jeweils zwei zueinander parallel angeordneten, zur Längserstreckungsrichtung des Trennelements (1) senkrecht stehenden und sich über die gesamte Längsausdehnung des Trennelements erstreckenden Vorsprüngen gebildet wird, wobei diese Vorsprünge bei Anordnung einer Mehrzahl von Ausnehmungen (1a) in einem Trennelement (1) derart miteinander verbunden sind, dass sie einen rechtwinklig gestalteten Mäander ergeben.

11. Schaltschranktrennwand nach Anspruch 10,
**dadurch gekennzeichnet, dass**
die durch die Mäanderform auf beiden Seiten der Trennwand gebildeten Ausnehmungen (1a) gleiche Breite und Tiefe aufweisen.

12. Schaltschranktrennwand nach einem der Ansprüche 10 und 11,
**dadurch gekennzeichnet, dass**
eine Mehrzahl von Querverbindern (2) auf beiden Seiten der Trennwand angeordnet ist, wobei die Länge eines jeden Querverbinders (2) kürzer als die Trennwandbreite ist und die Gesamt-Länge aller Querverbinder (2) zusammen länger als die Trennwandbreite ist.

13. Schaltschranktrennwand nach einem der Ansprüche 1 bis 8 und 10 bis 11,
**dadurch gekennzeichnet, dass**
der Querverbinder (2) als Winkelprofil ausgebildet ist, an dessen einer Winkelflanke die zapfenartigen Vorsprünge (3) in Reihe angeordnet sind und der an seinen Enden Stirnflächen (2a) mit Öffnungen (2b) zur Aufnahme von Befestigungsmitteln aufweist.

14. Schaltschranktrennwand nach Anspruch 13,
**dadurch gekennzeichnet, dass**
der Querverbinder (3) in einer im Wesentlichen glatt ausgestalteten Winkelflanke Befestigungslöcher (2d) aufweist.

15. Schaltschranktrennwand nach einem der Ansprüche 1 bis 12,
**dadurch gekennzeichnet, dass**
der Querverbinder (2) ein mäanderförmiges Profil aufweist, welches komplementär zu einem mäanderförmigen Profil der Trennelemente (1) ausgestaltet ist.

16. Schaltschranktrennwand nach Anspruch 15,
**dadurch gekennzeichnet, dass**
das mäanderförmige Profil des Querverbinders (2) das gleiche wie das mäanderförmige Profil der mit dem Querverbinder (2) zu befestigenden Trennelemente (1) ist.

17. Schaltschranktrennwand nach Anspruch 13,
**dadurch gekennzeichnet, dass**
der Querverbinder (2) aus einem Winkelprofil besteht, an dem auf einem Winkelschenkel Segmente (23) mit einer Reihe von zapfenartigen Vorsprüngen (3) mittels Einrasteinrichten (2c) angeordnet sind.

## Claims

1. Switchgear cabinet partition for isolating functional areas, having a plurality of isolating elements, which are aligned with one another, are arranged spaced apart parallel to one another and run in their longitudinal extents from one wall edge to an opposite wall edge, and having at least one cross-connector, which runs substantially at right angles to the longitudinal extent of the isolating elements, is arranged on one side of the partition and keeps the individual isolating elements together at a defined distance so as to produce a wall,
**characterised in that**
each isolating element (1) has at least one cutout (1a), which extends over its entire longitudinal extent, and each cross-connector (2) has pin-like projections (3) arranged in a row in its longitudinal direction, the pin-like projections (3) being designed so as to be complementary with respect to the cutouts (1a) of the isolating elements (1) in such a way that they can be inserted into them in a latching manner, with the result that an interlocking connection is produced between the pin-like projections (3) and the cutouts (1a) and that the isolating elements (1) are connected to one another via the cross-connector (2).

2. Switchgear cabinet partition according to claim 1,
**characterised in that**
the distance between the isolating elements (1) is not greater than 12 mm.

3. Switchgear cabinet partition according to any one of the preceding claims,
**characterised in that**
lugs (4) are arranged on the sides of the pin-like projections (3) of the cross-connectors (2) and when the projections are inserted engage in notches (5) which are arranged on the inner sides of the cutouts (1a).

4. Switchgear cabinet partition according to any one of the preceding claims,
**characterised in that**
predetermined breaking points (6) are fashioned in the surfaces of the isolating elements (1), said surfaces extending parallel to the overall wall surface.

5. Switchgear cabinet partition according to any one of the preceding claims,
**characterised in that**
the isolating elements (1) are extruded plastic profiles.

6. Switchgear cabinet partition according to any one of the preceding claims,
**characterised in that**
at least one cross-connector (2) extends perpendicular to the longitudinal extension of the isolating elements (1) over the entire width of the partition.

7. Switchgear cabinet partition according to any one of the preceding claims,
**characterised in that**
the cutout (1a) in the isolating element (1) is formed by the intermediate space between two projections which stand out perpendicular from a base surface of the isolating element (1), are arranged parallel to one another and extend over the entire longitudinal extent of the isolating element (1) such that when a plurality of cutouts (1a) are arranged in an isolating element (1) a comb-like profile of the isolating element (1) is produced.

8. Switchgear cabinet partition according to claim 7, **characterised in that**
the adjacently arranged cutouts (1a) of all the isolating elements (12) have the same width and depth.

9. Switchgear cabinet partition according to any one of claims 7 to 8,
**characterised in that**
a plurality of cross-connectors (2) are arranged on one side of the partition, the length of each cross-connector (2) being shorter than the partition width and the total length of all the cross-connectors (2) together being longer than the partition width.

10. Switchgear cabinet partition according to any one of claims 1 to 6,
**characterised in that**
the cutout (1a) in the isolating element (1) is formed by the intermediate space between two projections which are arranged parallel to one another, stand perpendicular to the direction of longitudinal extension of the isolating element (1) and extend over the entire longitudinal extent of the isolating element, wherein, when a plurality of cutouts (1a) are arranged in an isolating element (1), these projections are connected to one another such that they produce a meander having a right-angle design.

11. Switchgear cabinet partition according to claim 10,
**characterised in that**
the cutouts (1a) formed by the meander shape on both sides of the partition have the same width and depth.

12. Switchgear cabinet partition according to any one of claims 10 and 11,
**characterised in that**
a plurality of cross-connectors (2) are arranged on both sides of the partition, wherein the length of each cross-connector (2) is shorter than the partition width and the total length of all the cross-connectors (2) together is longer than the partition width.

13. Switchgear cabinet partition according to any one of claims 1 to 8 and 10 to 11,
**characterised in that**
the cross-connector (2) is fashioned as an angle profile, on one angle side of which the pin-like projections (3) are arranged in series and which has at its ends faces (2a) with apertures (2b) for receiving fastening means.

14. Switchgear cabinet partition according to claim 13,
**characterised in that**
the cross-connector (3) has fastening holes (2d) in an angle side which is fashioned in an essentially planar manner.

15. Switchgear cabinet partition according to any one of claims 1 to 12,
**characterised in that**
the cross-connector (2) has a meander-shaped profile which is fashioned so as to be complementary with respect to a meander-shaped profile of the isolating elements (1).

16. Switchgear cabinet partition according to claim 15,
**characterised in that**
the meander-shaped profile of the cross-connector (2) is the same as the meander-shaped profile of the isolating elements (1) to be fastened to the cross-connector (2).

17. Switchgear cabinet partition according to claim 13,
**characterised in that**
the cross-connector (2) consists of an angle profile on which on one angle leg segments (23) with a series of pin-like projections (3) are arranged by means of latching mechanisms (2c).

## Revendications

1. Paroi de séparation d'une armoire de distribution pour la séparation de compartiments fonctionnels, comprenant une pluralité d'éléments de séparation alignés disposés en parallèle à distance les uns des autres, qui s'étendent dans leurs extensions longitudinales d'un bord de paroi à un bord de paroi opposé, et au moins un raccord transversal sensiblement perpendiculaire à l'extension longitudinale placé d'un côté de la paroi de séparation, qui maintient les différents éléments de séparation à une distance définie pour former une paroi,
**caractérisée en ce que**
chaque élément de séparation (1) présente au moins un évidement (1a) s'étendant sur toute sa longueur, et chaque raccord transversal (2) présente dans le sens de sa longueur des saillies en forme de tenon (3), les saillies en forme de tenon (3) étant de forme complémentaire de celle des évidements (1a) des éléments de séparation (1) de manière qu'elles puissent s'engager par encliquetage dans ceux-ci pour obtenir une liaison par complémentarité de forme entre les saillies en forme de tenon (3) et les évidements (1a) et pour que les éléments de séparation (1) soient reliés entre eux par le raccord transversal (2).

2. Paroi de séparation d'une armoire de distribution selon la revendication 1,
**caractérisée en ce que**
l'espacement entre les éléments de séparation (1) ne dépasse pas 12 mm.

3. Paroi de séparation d'une armoire de distribution selon l'une des revendications précédentes,
**caractérisée en ce que**
des ergots (4) sont agencés sur les flancs des saillies en forme de tenon (3), qui en position emboîtée s'engagent dans des encoches (5) ménagées dans les flancs intérieurs des évidements (1a).

4. Paroi de séparation d'une armoire de distribution selon l'une des revendications précédentes,
**caractérisée en ce que**
des points destinés à la rupture (6) sont réalisés dans les surfaces parallèles à la surface totale de la paroi des éléments de séparation (1).

5. Paroi de séparation d'une armoire de distribution selon l'une des revendications précédentes,
**caractérisée en ce que**
les éléments de séparation (1) sont des profilés filés en matière plastique.

6. Paroi de séparation d'une armoire de distribution selon l'une des revendications précédentes,
**caractérisée en ce que**
au moins un raccord transversal (2) s'étend perpendiculairement à l'extension longitudinale des éléments de séparation (1) sur toute la largeur de la paroi de séparation.

7. Paroi de séparation d'une armoire de distribution selon l'une des revendications précédentes,
**caractérisée en ce que**
l'évidement (1a) ménagé dans l'élément de séparation (1) est formé par l'espace entre respectivement deux saillies partant verticalement d'une base de l'élément de séparation (1), disposées parallèlement l'une à l'autre et s'étendant sur toute l'étendue longitudinale de l'élément de séparation (1), de manière à obtenir, dans le cas d'une pluralité d'évidements (1a) agencés dans l'élément de séparation (1), un profil en forme de peigne de l'élément de séparation (1).

8. Paroi de séparation d'une armoire de distribution selon la revendication 7,
**caractérisée en ce que**
les évidements (1a) disposés l'un à côté de l'autre de tous les éléments de séparation (1) présentent les mêmes largeur et profondeur.

9. Paroi de séparation d'une armoire de distribution selon l'une des revendications 7 à 8,
**caractérisée en ce que**
une pluralité de raccords transversaux (2) est disposée d'un côté de la paroi de séparation, la longueur de chaque raccord transversale (2) étant inférieure à la largeur de la paroi de séparation et la longueur totale de tous les raccords transversaux (2) réunis étant supérieure à la largeur de la paroi de séparation.

10. Paroi de séparation d'une armoire de distribution selon l'une des revendications 1 à 6,
**caractérisée en ce que**
l'évidement (1a) ménagé dans l'élément de séparation (1) est formé par l'espace entre respectivement deux saillies disposées parallèlement l'une à l'autre, perpendiculaires à la direction de l'extension longitudinale de l'élément de séparation (1) et s'étendant sur toute l'étendue longitudinale de l'élément de séparation, lesdites saillies, dans le cas d'une pluralité d'évidements (1a) agencés dans l'élément de séparation (1), étant reliées entre elles de manière à obtenir un méandre de forme rectangulaire.

11. Paroi de séparation d'une armoire de distribution selon la revendication 10,
**caractérisée en ce que**
les évidements (1a) réalisés des deux côtés de la paroi de séparation du fait de la forme en méandre présentent les mêmes largeur et profondeur.

12. Paroi de séparation d'une armoire de distribution selon l'une des revendications 10 et 11,
**caractérisée en ce que**
une pluralité de raccords transversaux (2) est disposée des deux côtés de la paroi de séparation, la longueur de chaque raccord transversal (2) étant inférieure à la largeur de la paroi de séparation et la longueur totale de tous les raccords transversaux (2) réunis étant supérieure à la largeur de la paroi de séparation.

13. Paroi de séparation d'une armoire de distribution selon l'une des revendications 1 à 8 et 10 à 11,
**caractérisée en ce que**
le raccord transversal (2) est conçu sous forme de profilé angulaire, sur un flanc duquel sont alignées les saillies en forme de tenon (3) et qui présente à ses extrémités des faces frontales (2a) munies d'ouvertures (2b) pour recevoir des moyens de fixation.

14. Paroi de séparation d'une armoire de distribution selon la revendication 13,
**caractérisée en ce que**
le raccord transversal (3) présente des trous de fixation (2d) ménagés dans un flanc sensiblement lisse.

15. Paroi de séparation d'une armoire de distribution selon l'une des revendications 1 à 12,
**caractérisée en ce que**
le raccord transversal (2) a un profil en forme de méandre, complémentaire d'un profil en forme de méandre des éléments de séparation (1).

16. Paroi de séparation d'une armoire de distribution selon la revendication 15,
**caractérisée en ce que**
le profil en forme de méandre du raccord transversal (2) est le même que le profil en forme de méandre des éléments de séparation (1) à fixer au moyen du raccord transversal (2).

17. Paroi de séparation d'une armoire de distribution selon la revendication 13,
**caractérisée en ce que**
le raccord transversal (2) est constitué d'un profilé angulaire, sur un côté duquel sont disposés des segments (23) équipés d'une rangée de saillies en forme de tenon (3) au moyens de dispositifs d'encliquetage (2c).
